# EUROPÄISCHE PATENTANMELDUNG

(11) **EP 1 559 597 A1**
(43) Veröffentlichungstag der Anmeldung: **03.08.2005**
(21) Anmeldenummer: 05450015.2
(22) Anmeldetag: 28.01.2005
(51) Int. Cl.: B60G 17/027

(54) **Vorrichtung zur Niveauänderung eines Fahrzeuges**

(30) Priorität: 30.01.2004 AT 1322004
(71) Anmelder: House-of-tuning, 8101 Gratkorn (AT)
(72) Erfinder: Friedl, Christian, 8112 Gratwein (AT)
(74) Vertreter: Kopecky, Helmut, Dipl.-Ing.

(57) **Zusammenfassung**

Eine Vorrichtung zur Niveauveränderung eines mit einem Stoßdämpfer (1) versehenen Fahrzeuges, die in einfacher Weise auch nachträglich an einem Fahrzeug vorgesehen werden kann, ist dadurch gekennzeichnet, dass der Kolben (9) des Druckmittelzylinders (8) als scheibenförmiger Ringkolben ausgebildet ist, eine zentrische Ausnehmung für den Durchgang des Stoßdämpferkolbens (3) aufweist und am Stoßdämpferzylinder abstützbar ist, und dass der Zylinder (10) des Druckmittelzylinders (8) einen Innendurchmesser (D) aufweist, der größer ist als der Außendurchmesser (d) des Stoßdämpferzylinders (2), und mit seinem Boden (11) am Endbereich (5) des Stoßdämpferkolbens (3) abstützbar ist (Fig. 1).

## Beschreibung

Die Erfindung betrifft eine Vorrichtung zur Niveauveränderung eines mit einem Stoßdämpfer versehenen Fahrzeuges, mit einem zwischen einem Stoßdämpferzylinder und einem Endbereich eines Stoßdämpferkolbens wirkenden Druckmittelzylinder, der mittels eines Kompressors und/oder eines Druckmittel-Druckspeichers beaufschlagbar ist.

Vorrichtungen zur Niveauänderung eines Fahrzeuges sind bekannt, insbesondere für luftgefederte Fahrzeuge. Solche Vorrichtungen sind vom Hersteller des Fahrzeuges serienmäßig eingebaut, d.h. es ist eine solche Vorrichtung beim Kauf eines Fahrzeuges automatisch dabei oder es muss bei der Bestellung des Fahrzeuges eine solche Niveauveränderungsmöglichkeit als Sonderausstattung geordert werden. Eine nachträgliche Ausrüstung eines Fahrzeuges mit einer Niveauveränderung ist kaum möglich, und wenn, dann meist nur im Werk des Herstellers des Fahrzeuges durchzuführen, was einen erheblichen Aufwand darstellt.

Ein Problem ergibt sich bei Fahrzeugen mit einem Sportfahrwerk, insbesondere bei tiefergelegten PKW's, mit denen es nach erfolgter Tieferlegung oft nicht mehr möglich ist, über Bodenunebenheiten zu fahren, beispielsweise über Abstufungen von Garagen- bzw. Hofeinfahrten etc.

Aus der US 5,401,053 A ist eine Einrichtung der eingangs beschriebenen Art bekannt, bei der außen am Stoßdämpferzylinder eine Gleithülse, die mit ihrem Ende am Ende des Stoßdämpferkolbens fixiert ist, angeordnet ist, die wiederum von einem relativ zu ihr längsbeweglichen Zylinder umgeben ist, der an einer Feder, die am Stoßdämpferzylinder abgestützt ist, gegengelagert ist. Mittels eines hydraulischen Druckmittels kann der Zylinder gegenüber der Gleithülse bewegt werden, sodass Niveauänderungen des Fahrzeuges durchgeführt werden können. Diese Konstruktion ist wegen der Gleithülse und des Zylinders aufwendig, schwer - wenn überhaupt - an einem Fahrzeug nachträglich anzuordnen und erfordert einen hohen Arbeitsaufwand bei der Montage sowie bei einem Stoßdämpferwechsel.

Eine ähnliche Konstruktion mit denselben Nachteilen ist aus der DE 101 23491 A 1 bekannt. Auch hier erfordert ein nachträglicher Einbau speziell gestaltete Stoßdämpfer.

Die Erfindung bezweckt die Vermeidung der oben geschilderten Schwierigkeiten und Nachteile und stellt sich die Aufgabe, eine Vorrichtung der eingangs beschriebenen Art zu schaffen, die in einfacher Weise unter Zuhilfenahme von einfachen Werkzeugen von beliebigen Autowerkstätten ohne besondere Mühe und ohne Umbauarbeiten am Fahrgestell zu erfordern, auch nachträglich in ein Fahrzeug eingebaut werden kann. Ein Einbau der erfindungsgemäßen Vorrichtung soll das Fahrverhalten, d.h. die Straßenlage des Fahrzeuges, nicht verändern, und es soll sich der finanzielle Aufwand in bescheidenen Grenzen halten.

Diese Aufgabe wird erfindungsgemäß dadurch gelöst, dass der Kolben des Druckmittelzylinders als scheibenförmiger Ringkolben ausgebildet ist, eine zentrische Ausnehmung für den Durchgang des Stoßdämpferkolbens aufweist und am Stoßdämpferzylinder abstützbar ist, und dass der Zylinder des Druckmittelzylinders einen Innendurchmesser aufweist, der größer ist als der Außendurchmesser des Stoßdämpferzylinders, und mit seinem Boden am Endbereich des Stoßdämpferkolbens abgestützt, insbesondere befestigt ist.

Eine bevorzugte Ausführungsform ist dadurch gekennzeichnet, dass der Boden des Zylinders des Druckmittelzylinders mit einem den Zylinder des Druckmittelzylinders nach außen überragenden Flansch zum Abstützen einer Feder ausgebildet ist.

Hierbei ist der Ringkolben des Druckmittelzylinders vorzugsweise sowohl ringinnenseitig als auch ringaußenseitig mit einer Dichtung versehen.

Vorzugsweise dient entweder der Kolben oder der Zylinder des Druckmittelzylinders als Gegenlager bzw. als Federteller einer konzentrisch zum Stoßdämpfer angeordneten Feder dient.

Zur einfachen Bedienung der erfindungsgemäßen Vorrichtung ist zum Komprimieren des Druckmittels, wie beispielsweise Luft oder Öl, ein Kompressor vorgesehen, dem ein Rückschlagventil nachgeordnet ist, über welches das Druckmittel in einen Druckbehälter einleitbar ist, aus welchem Druckbehälter das Druckmittel mittels eines Schaltventils über Leitungen zu einem oder mehreren Druckmittelzylinder(n) zur Niveaueinstellung leitbar ist.

Vorzugsweise ist das Schaltventil als Magnetventil ausgebildet, das über einen elektrischen Bedienteil aktivierbar oder deaktivierbar ist.

Eine Variante ist dadurch gekennzeichnet, dass der Kolben des Druckmittelzylinders als Ringkolben ausgebildet ist, eine zentrische Ausnehmung für den Durchgang des Stoßdämpferkolbens aufweist und am Endbereich des Stoßdämpferkolbens abstützbar ist, und dass der Zylinder des Druckmittelzylinders mit seinem Boden am Stoßdämpferzylinder abstützbar ist.

Ein Fahrzeug mit der erfindungsgemäßen Vorrichtung ist dadurch gekennzeichnet, dass die Vorrichtung an zumindest einer der Achsen des Fahrzeuges vorgesehen ist, vorzugsweise an allen Achsen; insbesondere ist für jeden Stoßdämpfer des Fahrzeuges eine solche Vorrichtung eingebaut.

Ein Bausatz für den nachträglichen Einbau der erfindungsgemäßen Vorrichtung in ein Fahrzeug ist gekennzeichnet durch mindestens einen Druckmittelzylinder, einen Kompressor, ein Rückschlagventil, gegebenenfalls einen Druckbehälter, mindestens ein über einen Bedienteil aktivier- und deaktivierbares Schaltventil sowie Druckmittelleitungen zum Verbinden der einzelnen Teile des Bausatzes und gegebenenfalls eine Druckanzeigeeinrichtung.

Die Erfindung ist nachfolgend anhand mehrerer in der Zeichnung dargestellter Ausführungsbeispiele näher erläutert, wobei Fig. 1 einen Schnitt durch einen Stoßdämpfer eines Straßenfahrzeuges in schematischer Darstellung zeigt. Fig. 2 veranschaulicht ebenfalls in schematischer Darstellung die gesamte Vorrichtung für den Einbau in ein Fahrzeug. Die Fig. 3, 4 und 5 zeigen Varianten in Schnittdarstellung.

Ein Stoßdämpfer 1 eines Fahrzeuges weist einen Stoßdämpferzylinder 2 - oft auch Stoßdämpfergehäuse genannt - auf, aus dem nach oben ein Stoßdämpferkolben 3 ragt. Dieser Stoßdämpferkolben 3 ist gegenüber dem Stoßdämpferzylinder 2 in Richtung dessen Längsachse 4 axial bewegbar und stützt sich mit seinem oberen Ende 5 an der Fahrzeugkarosserie 6 ab, wogegen der Stoßdämpferzylinder 2 an einer Achse des Fahrzeuges befestigt ist, was nicht näher dargestellt ist. Bei manchen Fahrzeugen ist der Stoßdämpfer 1 umgekehrt eingebaut, d.h. der Stoßdämpferkolben 3 ist an einer Achse des Fahrzeuges und der Stoßdämpferzylinder 2 an der Fahrzeugkarosserie 6 abgestützt.

Üblicherweise ist eine Schraubenfeder 7 zwischen der Achse und der Fahrzeugkarosserie 6, an der sich der Stoßdämpferkolben 3 abstützt, vorgesehen, wobei diese Schraubenfeder 7 meist zentrisch zur Längsachse 4 des Stoßdämpfers 1 vorgesehen ist.

Die erfindunsgemäße Vorrichtung zur Niveauveränderung weist einen Druckmittelzylinder 8 auf, der zwischen dem Stoßdämpferzylinder 2 und dem Endbereich 5 des Stoßdämpferkolbens 3 zur Wirkung kommt. Zu diesem Zweck ist der Kolben 9 dieses Druckmittelzylinders 8 als Ringkolben ausgebildet und wird vom Stoßdämpferkolben 3 zentrisch durchsetzt. Der Zylinder 10 des Druckmittelzylinders 8 ist mit seinem Boden 11 am Endbereich 5 des Stoßdämpferkolbens 3 befestigt, beispielsweise mit diesem mittels einer Schraube 12 verschraubt; er kann jedoch auch direkt an der Fahrzeugkarosserie 6 (oder einer Fahrzeugachse - bei umgekehrter Einbaulage des Stoßdämpfers 1) angeordnet sein, in welchem Fall sich der Stoßdämpferkolben 3 am Zylinder 10 abstützt.

Der Zylinder 10 des Druckmittelzylinders 8 umgibt ebenfalls den Stoßdämpferkolben 3 zentrisch, d.h. der gesamte Druckmittelzylinder 8 ist zentrisch zur Längsachse 4 des Stoßdämpfers 1 eingebaut. Der Boden 11 dieses Zylinders 10 weist einen radial vorstehenden Flansch 13 auf, an dem sich die Schraubenfeder 7, die zentrisch zum Stoßdämpfer 1 vorgesehen ist, abstützt, sodass die Federung des Fahrzeuges gesichert ist.

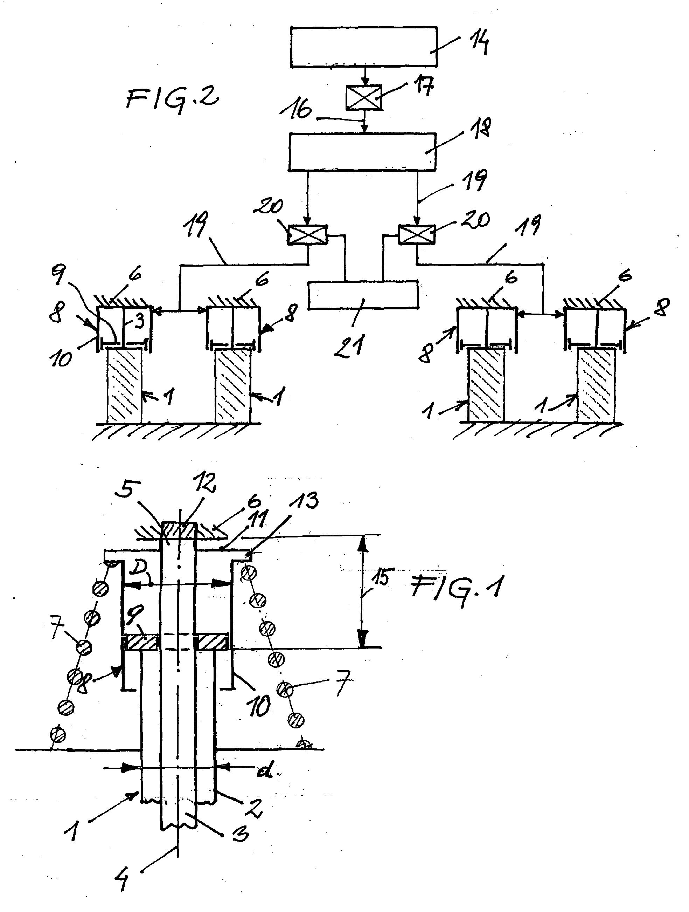

Der Ringkolben 9 ist sowohl gegenüber dem Stoßdämpferkolben 3 als auch gegenüber dem Zylinder 10 mittels Dichtungen 21 abgedichtet. Der Zylinder 10 weist, wie aus Fig. 1 zu sehen ist, einen etwas größeren Innendurchmesser D auf als der Außendurchmesser d des Stoßdämpferzylinders 2, wodurch die Vorrichtung zur Niveauveränderung besonders platzsparend untergebracht werden kann und eine optimale Niveauveränderung, d.h. eine Niveauveränderung über einen möglichst großen Bereich, ermöglicht.

Der Druckmittelzylinder 8 ist mittels eines Kompressors 14 beaufschlagbar, wobei der Abstand 15 zwischen dem Ende des Stoßdämpferkolbens 3 und dem Stoßdämpferzylinder 2 veränderbar ist. Hierdurch lässt sich der Abstand der Fahrzeugachse zur Karosserie und damit das Niveau des Fahrzeuges verändern, und zwar unter Mithilfe der Feder 7.

Wie aus Fig. 2 zu ersehen ist, ist der Kompressor 14 über eine Druckmittelleitung 16 über ein Rückschlagventil 17 mit einem Druckspeicher 18 verbunden, von dem aus Zuführungsleitungen 19 für das Druckmittel zum Druckmittelzylinder 8 ausgehen, wobei die Druckmittelzylinder 8 über Magnetventile 20, die über einen elektrischen Bedienteil 21 betätigt werden können, aktivier- oder deaktivierbar sind.

Als Druckmittel lassen sich verschiedene Medien einsetzen, beispielsweise Luft, Öl oder eine sonstige Hydraulikflüssigkeit. Zweckmäßig ist zur Kontrolle des Druckes eine Einrichtung zur Druckanzeige vorgesehen.

Falls notwendig, ist es möglich, eine Geschwindigkeitsbegrenzung für das Fahrzeug vorzusehen, wenn im völlig gehobenen oder im sehr hoch gehobenen Zustand gefahren wird, zumal sich bei voller Ausschöpfung der Hubbewegung des Stoßdämpferkolbens gegenüber dem Stoßdämpferzylinder 2 der Federweg verringert. Eine solche Geschwindigkeitsbegrenzung kann mit der Niveauveränderung gekoppelt sein.

Die Erfindung beschränkt sich nicht auf das dargestellte Ausführungsbeispiel, sondern lässt sich in verschiedener Hinsicht modifizieren. Beispielsweise ist es nicht erforderlich, den Kolben 9 am Stoßdämpferzylinder 2 aufsitzen zu lassen und den Zylinder 10 am Endbereich des Stoßdämpferkolbens 3 zu fixieren, es könnte der Druckmittelzylinder 8 auch umgekehrt eingebaut sein, jedoch hat sich die in Fig. 1 dargestellte Variante als besonders platzsparend erwiesen.

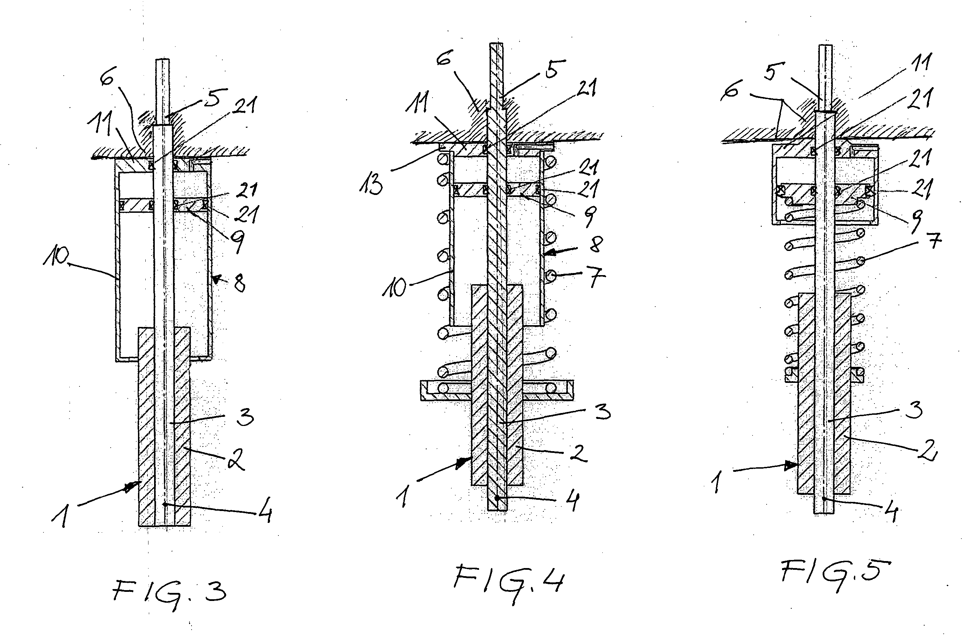

Für Fahrzeuge, bei denen die Schraubenfedern 7 nicht zentrisch zur Längsachse 4 des Stoßdämpfers 1 vorgesehen sind, und für Fahrzeuge, die mit einer anderen Art von Federung ausgestattet sind, erübrigt sich der vom Boden 11 des Zylinders 10 des Druckmittelzylinders 8 radial vorragende Flansch 13 (vgl. Fig. 3).

Fig. 4 zeigt eine Variante, bei der der Zylinder 10 am Stoßdämpferzylinder 2 abgestützt ist, Fig. 5 eine Ausführungsform mit am Stoßdämpferzylinder 2 abgestützen Kolben 9.

Die oben beschriebenen Vorrichtungen eignen sich in besonderer Weise für einen nachträglichen Einbau an einem Fahrzeug. Selbstverständlich können sie auch für eine werkseitige Montage Verwendung finden.

## Patentansprüche

1. Vorrichtung zur Niveauveränderung eines mit einem Stoßdämpfer (1) versehenen Fahrzeuges, mit einem zwischen einem Stoßdämpferzylinder (2) und einem Endbereich (5) eines Stoßdämpferkolbens (3) wirkenden Druckmittelzylinder (8), der mittels eines Kompressors (14) und/oder eines Druckmittel-Druckspeichers (18) beaufschlagbar ist, **dadurch gekennzeichnet, dass** der Kolben (9) des Druckmittelzylinders (8) als scheibenförmiger Ringkolben ausgebildet ist, eine zentrische Ausnehmung für den Durchgang des Stoßdämpferkolbens (3) aufweist und am Stoßdämpferzylinder abstützbar ist, und dass der Zylinder (10) des Druckmittelzylinders (8) einen Innendurchmesser (D) aufweist, der größer ist als der Außendurchmesser (d) des Stoßdämpferzylinders (2), und mit seinem Boden (11) am Endbereich (5) des Stoßdämpferkolbens (3) abgestützt, insbesondere befestigt ist.

2. Vorrichtung nach Anspruch 1, **dadurch gekennzeichnet, dass** der Boden (11) des Zylinders (10) des Druckmittelzylinders (8) mit einem den Zylinder (10) des Druckmittelzylinders (8) nach außen überragenden Flansch (13) zum Abstützen einer Feder (7) ausgebildet ist.

3. Vorrichtung nach Anspruch 1 oder 2, **dadurch gekennzeichnet, dass** der Ringkolben (9) des Druckmittelzylinders (8) sowohl ringinnenseitig als auch ringaußenseitig mit einer Dichtung versehen ist.

4. Vorrichtung nach einem oder mehreren der Ansprüche 1 bis 3, **dadurch gekennzeichnet, dass** entweder der Kolben (9) oder der Zylinder (10) des Druckmittelzylinders (8) als Gegenlager bzw. als Federteller (13) einer konzentrisch zum Stoßdämpfer (1) angeordneten Feder (7) dient.

5. Vorrichtung nach einem oder mehreren der Ansprüche 1 bis 4, **dadurch gekennzeichnet, dass** zum Komprimieren des Druckmittels, wie beispielsweise Luft oder Öl, ein Kompressor (14) vorgesehen ist, dem ein Rückschlagventil (17) nachgeordnet ist, über welches das Druckmittel in einen Druckbehälter (18) einleitbar ist, aus welchem Druckbehälter (18) das Druckmittel mittels eines Schaltventiles (20) über Leitungen (19) zu einem oder mehreren Druckmittelzylinder(n) (8) zur Niveaueinstellung leitbar ist.

6. Vorrichtung nach Anspruch 5, **dadurch gekennzeichnet, dass** das Schaltventil (20) als Magnetventil ausgebildet ist, das über einen elektrischen Bedienteil (21) aktivierbar oder deaktivierbar ist.

7. Vorrichtung zur Niveauveränderung eines mit einem Stoßdämpfer (1) versehenen Fahrzeuges mit einem zwischen einem Stoßdämpferzylinder (2) und einem Endbereich (5) eines Stoßdämpferkolbens (3) wirkenden Druckmittelzylinder (8), der mittels eines Kompressors (14) und/oder eines Druckmittels-Druckspeicher (18) beaufschlagbar ist, **dadurch gekennzeichnet, dass** der Kolben (9) des Druckmittelzylinders (8) als Ringkolben ausgebildet ist, eine zentrische Ausnehmung für den Durchgang des Stoßdämpferkolbens (3) aufweist und am Endbereich (5) des Stoßdämpferkolbens (3) abgestützt ist, und dass der Zylinder (10) des Druckmittelzylinders mit seinem Boden am Stoßdämpferzylinder (2) abgestützt ist.

8. Fahrzeug mit mindestens einer Vorrichtung nach einem oder mehreren der Ansprüche 1 bis 7, **dadurch gekennzeichnet, dass** die Vorrichtung an zumindest einer der Achsen des Fahrzeuges vorgesehen ist, vorzugsweise an allen Achsen, insbesondere dass für jeden Stoßdämpfer (1) des Fahrzeuges eine solche Vorrichtung eingebaut ist.

9. Bausatz für den nachträglichen Einbau einer Vorrichtung nach einem oder mehreren der Ansprüche 1 bis 7 in ein Fahrzeug, **gekennzeichnet durch** mindestens einen Druckmittelzylinder (8), einen Kompressor (14), ein Rückschlagventil (17), gegebenenfalls einen Druckbehälter (18), mindestens ein über einen Bedienteil aktivier- und deaktivierbares Schaltventil (20) sowie Druckmittelleitungen (16, 19) zum Verbinden der einzelnen Teile des Bausatzes, und gegebenenfalls eine Druckanzeigeeinrichtung.
